# EUROPEAN PATENT APPLICATION

(11) **EP 2 413 593 A1**
(43) Date of publication of application: **01.02.2012**
(21) Application number: 11154872.3
(22) Date of filing: 17.02.2011
(51) Int. Cl.: H04N 5/76, H04N 21/458, H04N 21/433

(54) **Broadcast recording apparatus and broadcast recording method**

(30) Priority: 28.07.2010 JP 2010169643
(71) Applicant: Kabushiki Kaisha Toshiba, Tokyo 105-8001 (JP)
(72) Inventor: Takao, Yuji, Tokyo 105-8001 (JP)
(74) Representative: Henkel, Breuer & Partner

(57) **Abstract**

According to embodiments, there is provided a broadcast recording apparatus, including: video receiving/analyzing modules at least one of which is different in an analyzing performance from the others; a controller configured to determine priorities for a contents to be recorded; and a video storage configured to record the contents. The controller is configured to determine priorities for the video receiving/analyzing modules, to allocate high-priority one of the video receiving/analyzing modules with high-priority one of the contents, and to control the video storage to record the content.

## Description

### CROSS-REFERENCE TO RELATED APPLICATION(S)

This application is based upon and claims the benefit of priority from Japanese Patent Application No. 2010-169643, filed on July 28, 2010, the entire contents of which are incorporated herein by reference.

### FIELD

Embodiments described herein relate generally to a broadcast recording apparatus and a broadcast recording method for recording broadcast contents.

### BACKGROUND

An apparatus capable of recording plural contents simultaneously has been put into practical use, and efforts are made to appropriately allocate the contents to recording units. For example, JP-2009-033440-A discloses a broadcast receiving apparatus, in which priority of each recording device is set in accordance with response time of the recording device (time required for actual start of recording after issuing of an instruction to start the recording), and when recording, the priority is referred for determining one of the recording devices.

On the other hand, there are no means for determining priority based on the difference in video/audio analyzing function between the recording devices.

### SUMMARY

One object of the invention is to provide a broadcast recording apparatus and a broadcast recording method capable of recording contents in accordance with priority determined based on the difference in video/audio analyzing function between recording devices.

According to embodiments, there is provided a broadcast recording apparatus, including: video receiving/analyzing modules at least one of which is different in an analyzing performance from the others; a controller configured to determine priorities for a contents to be recorded; and a video storage configured to record the contents. The controller is configured to determine priorities for the video receiving/analyzing modules, to allocate high-priority one of the video receiving/analyzing modules with high-priority one of the contents, and to control the video storage to record the high-priority one of the contents.

The controller may calculate a user's preference for the contents to be recorded, and determine the priorities for the contents based on the user's preference.

The controller may give a higher priority to a video receiving/analyzing module based on whether an analyzing process congenial to the user's preference is executable.

According to embodiments, there is also provided a broadcast recording apparatus, including: video receiving/analyzing modules at least one of which is different in an analyzing performance from the others; a controller configured to calculate a user's preference for contents to be recorded, and to determine priorities for the contents based on the user's preference; and a video storage configured to record the contents. The controller is configured to determine priorities for the video receiving/analyzing modules to be in an order of analyzing performance, to allocate high-priority one of the video receiving/analyzing modules with high-priority one of the contents, and to control the video storage to record the high-priority one of the contents.

According to embodiments, there is also provided a broadcast recording apparatus, including: video receiving/analyzing modules at least one of which is different in an analyzing performance from the others; a controller configured to calculate a user's preference for analyzing processes to be executed by the video receiving/analyzing modules, and to determine priorities for the video receiving/analyzing modules based on whether the analyzing processes are executable; and a video storage configured to record the contents. The controller is configured to allocate high-priority one of the video receiving/analyzing modules with high-priority one of the contents, and to control the video storage to record the high-priority one of the contents.

According to embodiments, there is also provided a broadcast recording method in a broadcast recording apparatus having video receiving/analyzing modules at least one of which is different in an analyzing performance from the others and a video storage configured to record contents, the method including: determining priorities for the contents to be recorded; determining priorities for the video receiving/analyzing modules based on whether an analyzing process congenial to a user's preference is executable; allocating high-priority one of the video receiving/analyzing modules with high-priority one of the contents; and controlling the video storage to record the high-priority one of the contents.

### BRIEF DESCRIPTION OF THE DRAWINGS

A general architecture that implements the various features of the present invention will now be described with reference to the drawings. The drawings and the associated descriptions are provided to illustrate embodiments of the present invention and not to limit the scope of the present invention.

Fig. 1 illustrates a system configuration of a broadcast recording apparatus according to an embodiment.

Fig. 2 illustrates a remote controller for operating the broadcast recording apparatus.

Fig. 3 is a functional block diagram exemplifying the embodiment.

Fig. 4 is a flow chart exemplifying operation performed in the embodiment.

Fig. 5 is a flow chart exemplifying operation performed in another embodiment.

### DETAILED DESCRIPTION

In general, according to one embodiment, there is provided a broadcast recording apparatus, including: video receiving/analyzing modules at least one of which is different in an analyzing performance from the others; a controller configured to determine priorities for a contents to be recorded; and a video storage configured to record the contents. The controller is configured to determine priorities for the video receiving/analyzing modules, to allocate high-priority one of the video receiving/analyzing modules with high-priority one of the contents, and to control the video storage to record the high-priority one of the contents.

Embodiments will be described below.

(First Embodiment)

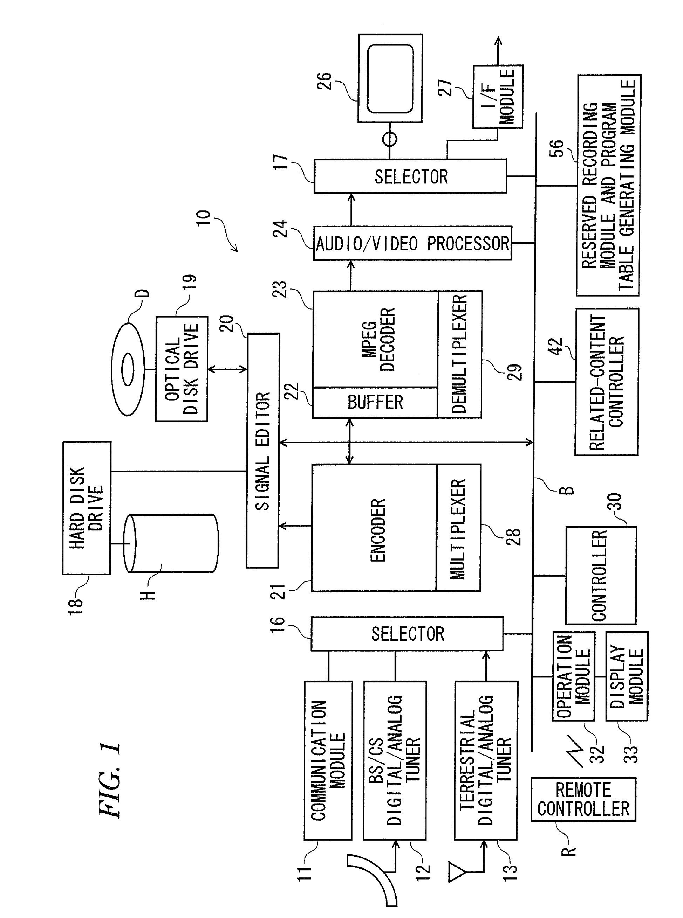

A first embodiment will be described with reference to Figs. 1 to 4.

Fig. 1 illustrates a system configuration of a broadcast recording apparatus according to an embodiment. For example, the broadcast recording apparatus 10 in Fig. 1 is a hard disk recorder which has recording functions using tuners or the like as sources. However, the invention can be also applied to a digital television set having tuners or the like, and recording functions.

In the following description, while the broadcast recording apparatus 10 will be described as a hard disk recorder having recording functions, the broadcast recording apparatus 10 can be interpreted as a digital television set having the same functions. In this case, a display 26 in Fig. 1 will be included thereto.

In Fig. 1, the broadcast recording apparatus 10 as a hard disk recorder has two kinds of disk drives. A hard disk drive 18 drives a hard disk H as a first medium, and an optical disk drive 19 drives an optical disk D as a second medium to rotate and executes reading/writing of information. The optical disk D is an information recording medium in which video files can be constructed. A controller 30 is connected to respective elements through a data bus B to generally control the whole operation of the apparatus. The hard disk drive 18 or the optical disk drive 19 is however a constituent member which is not essential to the invention.

The broadcast recording apparatus 10 in Fig. 1 has an encoder 21 as a recording side, an MPEG decoder 23 as a reproduction side, and the controller 30 controlling whole operation of the apparatus. The broadcast recording apparatus 10 has an input-side selector 16, and an output-side selector 17. A communication module 11 such as a LAN, a so-called satellite broadcast (BS/CS) digital/analog tuner 12, and a so-called terrestrial digital/analog tuner 13 are connected to the input-side selector 16, so that each signal via the input-side selector 16 is outputted to the encoder 21. A satellite antenna is connected to the BS/CS digital/analog tuner 12 while a terrestrial antenna is connected to the terrestrial digital/analog tuner 13. The broadcast recording apparatus 10 further has a signal editor 20 which receives an output of the encoder 21 and performs desired data processing such as data editing. The hard disk drive 18 and the optical disk drive 19 both are connected to the signal editor 20. The broadcast recording apparatus 10 further has a buffer 22 of the MPEG decoder 23 which receives signals from the hard disk drive 18 and the optical disk drive 19 and decodes the signals, a multiplexer 28, a demultiplexer 29, a related-content controller 42, and a reserved recording module and program table generating module 56. These elements are connected to the controller 30 through the data bus B. An output of the selector 17 is supplied to the display 26 or to an external device through an interface module 27 which performs communication with the external device.

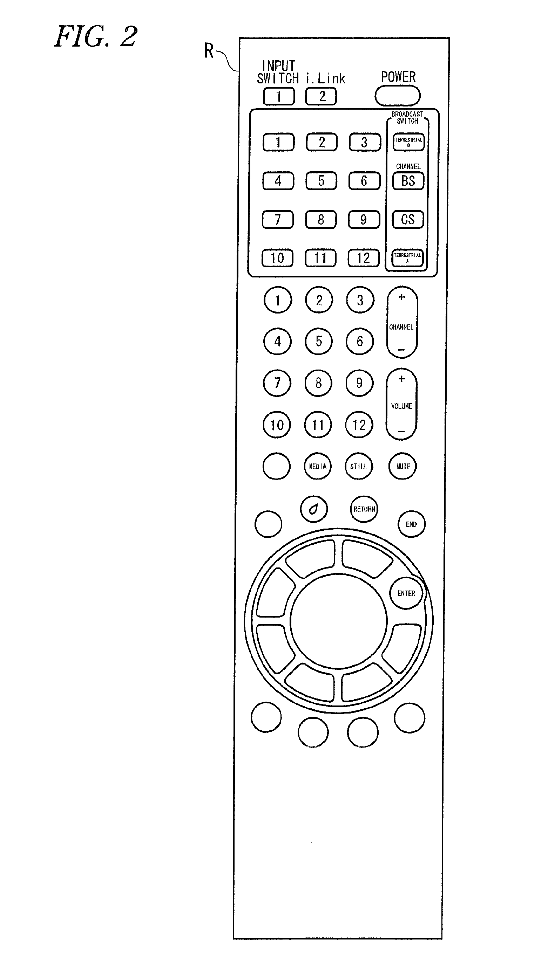

The broadcast recording apparatus 10 further has an operation module 32 which is connected to the controller 30 through the data bus B and which receives user's operation thereon or on a remote controller R. The remote controller R can perform substantially the same operation as that of the operation module 32 provided in the body of the broadcast recording apparatus 10. For example, the remote controller R can perform a recording/reproducing instruction toward the hard disk drive 18 or the optical disk drive 19, an editing instruction, a tuner operation and various settings such as recording reservation. Fig. 2 illustrates the remote controller R of Fig. 1 for operating the broadcast recording apparatus.

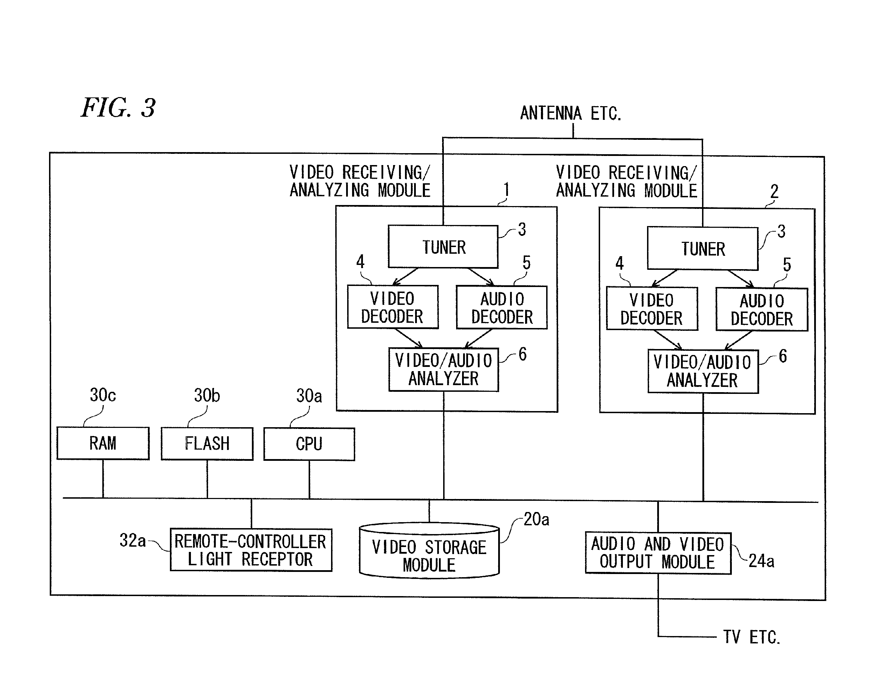

Fig. 3 is a functional block diagram for exemplifying of the embodiment. In Fig. 3, two video receiving/analyzing units are mounted. Each video receiving/analyzing unit includes a tuner 3, a video decoder 4, an audio decoder 5, and a video/audio analyzer 6. Fig. 3 is just an example, and three or more video receiving/analyzing units may be provided.

The tuner 3 corresponds to the BS/CS digital/analog tuner 12 or the terrestrial digital/analog tuner 13. The video decoder 4 and the audio decoder 5 correspond to the demultiplexer 29 and the MPEG decoder 23. The video/audio analyzer 6 corresponds to an audio/video processor 24. The controller 30 includes a CPU 30a which performs program processing for the purpose of controlling the respective elements of the apparatus etc., a flash memory 30b in which the program is written, and an RAM 30c which is a work memory for this program. A remote-controller light receptor 32a corresponds to the operation module 32. A video storage module 20a corresponds to the hard disk drive 18 and the optical disk drive 19. An audio and video output module 24a corresponds to the audio/video processor 24, etc.

While an HDD recorder and a recording-function-implemented television set capable of receiving broadcast waves through an antenna are exemplified, the embodiment can be also applied to a recording-function-implemented IP TV system in which audio and video are transmitted on an IP network.

When plural video receiving/analyzing modules are provided, all the video receiving/analyzing modules may not have the same performance. For example, the video receiving/analyzing modules may be different in performance from one another because of technical factors such as the bandwidth of the bus and factors concerned with product development such as product lineup.

For example, the video decoders may have different specifications as follows:

1) Video can be entirely decoded

2) Only I pictures of video can be decoded

3) Video cannot be decoded

Also, the audio decoders may have different specifications as follows:

A) Audio can be entirely decoded

B) Only front 2ch of audio can be decoded

C) Only volume information of audio can be obtained

D) Audio cannot be decoded

Performance of each video receiving/analyzing module is determined by a combination of these.

For example, two video receiving/analyzing modules having following performances are assumed.

### <Video receiving/analyzing module 1>

1) Video can be entirely decoded

A) Audio can be entirely decoded

### <Video receiving/analyzing module 2>

3) Video cannot be decoded

B) Only front 2ch of audio can be decoded

Screen display or video and audio analysis is performed by the two receiving/analyzing modules.

For example, as analyzing methods, CM detection (see JP-2006-324743-A), scene detection (see JP-2005-130416-A), and music detection (JP-2008-298976-A) are available.

Assume that the following information about the respective analyzing functions is required.

**[Table 1]**

| | Video | Audio |
|---|---|---|
| CM Detection | Unnecessary | Entirely decoding, decoding only front 2ch, or obtaining volume information |
| Scene Detection | Entirely decoding, or decoding only I pictures | Unnecessary |
| Music Detection | Unnecessary | Entirely decoding, or decoding only front 2ch |

In this case, "CM detection", "scene detection" and "music detection" can be executed by the video receiving/analyzing module 1 while "CM detection" and "music detection" can be executed by the video receiving/analyzing module 2.

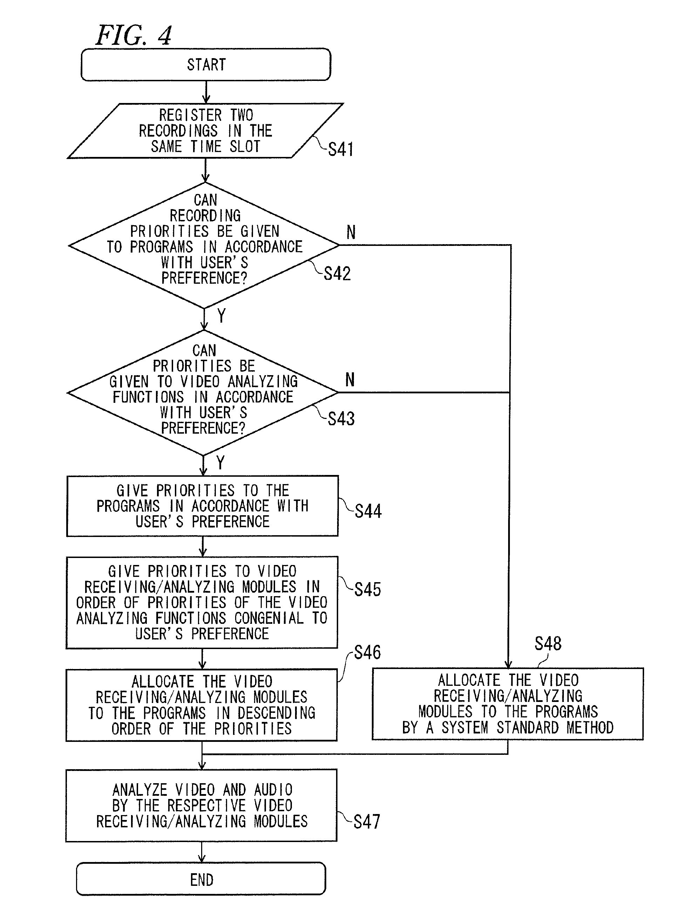

When a user wants to record two programs (program X and program Y) broadcasted in the same time slot, it is necessary to determine allocation of the two programs to the video receiving/analyzing modules (step S41 in Fig. 4).

When the executable analyzing process varies according to each video receiving/analyzing module, in this embodiment, allocation of the video receiving/analyzing modules is determined in the following manner while assuming that the user wants to execute all of the analyzing processes.

First, recording priorities are given to the programs X and Y in accordance with a user's preference (step S42). For calculating the user's preference, known method (see JP-2007-272451-A) can be used. And, any one of the following methods α to y may be used. It may be interactively set through a menu screen using various buttons of the remote controller R.

α: The number of points where keywords entered by the user have been coincident with keywords contained in metadata of a program

β: The number of times by which the user has recorded the same program

γ: The number of times by which the user has viewed the same program

Then, priorities are given to the video/audio analyzing processes (step S43). The priorities may be explicitly set by the user (step S44) or may be determined based on the number of times by which the user has performed analysis so far. Priorities are given to the video receiving/analyzing modules 1 and 2 based on the priorities of the video/audio analyzing processes so that a higher priority is given to a video receiving/analyzing module having performance allowed to execute processing (step S45).

Video receiving/analyzing modules which can execute video/audio analyzing processes congenial to the user's preference are allocated to programs congenial to the user's preference (step S46), and recording and analysis are performed (step S47). That is, the video receiving/analyzing modules 1 and 2 are allocated to the programs in accordance with the priorities of the programs and the priorities of the video receiving/analyzing modules. When priorities cannot be given in the step S42 or S43, the video receiving/analyzing modules are allocated to the programs by a system standard method (step S48), and recording and analysis are performed (step S47).

### (Second Embodiment)

A second embodiment will be described with reference to Figs. 1 to 3 and Fig. 5. Description about parts the same as those in the first embodiment will be omitted here.

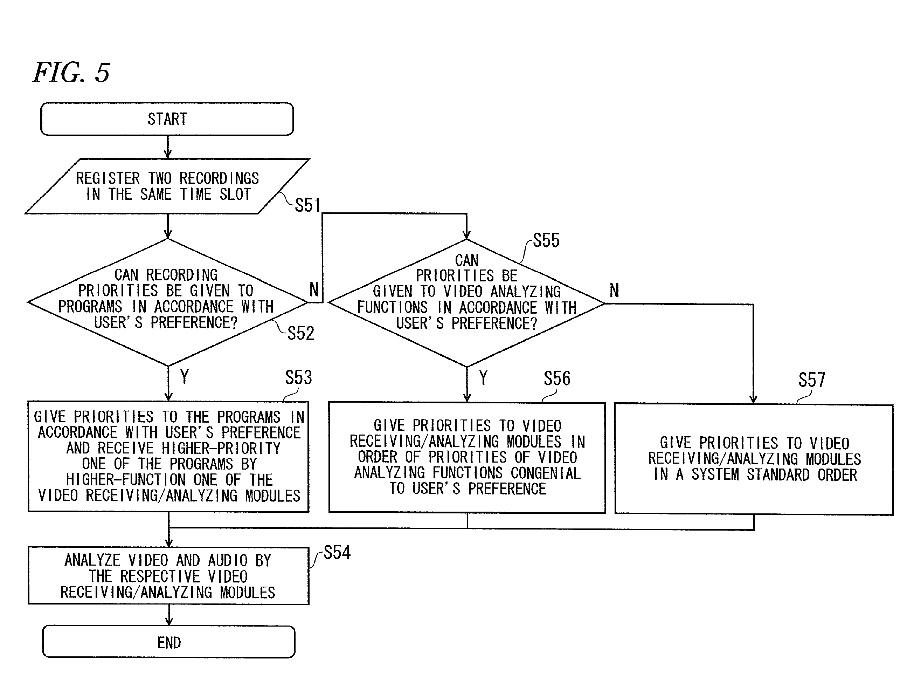

Two recordings are registered in the same time slot in step S51 in Fig. 5. When priorities can be given to the programs based on the user's preference by the aforementioned method (Yes in step S52), a larger number of video/audio analyzing processes are performed on a program more congenial to the user's preference. That is, video receiving/analyzing modules of higher performance are allocated to the programs in order of user's preference (step S53) and reception and analysis are performed (step S54).

When priorities cannot be given to the programs (No in the step S52), priorities are given to the video/audio analyzing processes (step S55). The priorities may be explicitly set by the user or may be determined based on the number of times by which the user has performed analysis so far. Priorities are given to the video receiving/analyzing modules in accordance with the priorities of the video/audio analyzing processes so that a higher priority is given to a video receiving/analyzing module having performance allowed to execute processing (step S56).

The video receiving/analyzing modules are used in order of priorities for recording. For example, a program at an early recording time or a program having a long recording time is received and analyzed by high-priority one of the video receiving/analyzing modules (step S54). When priorities cannot be given in the step S55, the video receiving/analyzing modules are allocated to the programs by a system standard method (step S57) and recording and analysis are performed (step S54).

In this embodiment, a broadcast receiving apparatus provided with plural recording devices uses the difference in video/audio analyzing function between the recording devices in order to determine priorities of the recording devices. Moreover, the broadcast receiving apparatus learns the user's preference for video to be recorded and video/audio analyzing functions frequently used by the user to reflect the learning result on the priorities of the recording devices.

As an effect, when plural recordings occur simultaneously, a larger number of kinds of video/audio analyzing functions can be executed on a program more congenial to the user's preference, and/or the video/audio analyzing functions can be performed in accordance with the user's preference.

In order to automatically perform video/audio analyzing processes on a program congenial to the user's preference without the user's designation, within the limitations of the system performance, following configurations may be adapted.

(1) A video receiving and analyzing apparatus provided with video receiving/analyzing modules may be configured such that, when the same analyzing process cannot be executed because the video receiving/analyzing modules are different in performance, the video receiving and analyzing apparatus calculates the user's preference for contents the user wants to record, calculates recording priorities of the contents when recordings of the contents overlap each other, calculates the user's preference for analyzing processes to be executed by the video receiving/analyzing modules, obtains priorities of the video receiving/analyzing modules which can execute analyzing processes congenial to the user's preference, and allocates high-priority one of the video receiving/analyzing modules to recording of high-priority one of the contents.

(2) A video receiving and analyzing apparatus provided with video receiving/analyzing modules may be configured such that, when the same analyzing process cannot be executed because the video receiving/analyzing modules are different in performance, the video receiving and analyzing apparatus calculates the user's preference for contents the user wants to record, calculates recording priorities of the contents when recordings of the contents overlap each other, and allocates high-performance one of the video receiving/analyzing modules to recording of high-priority one of the contents.

(3) A video receiving and analyzing apparatus provided with video receiving/analyzing modules may be configured such that, when the same analyzing process cannot be executed because the video receiving/analyzing modules are different in performance, the video receiving and analyzing apparatus calculates the user's preference for analyzing processes to be executed by the video receiving/analyzing modules, calculates priorities of the video receiving/analyzing modules which can execute analyzing processes congenial to the user's preference, and starts recording at high-priority one of the video receiving/analyzing units.

The invention is not limited to the aforementioned embodiments. Various modifications may be made without departing from the scope of the invention. For example, respective priorities may be given separately by the following method.

(1) When priorities can be given to programs to be recorded, high-performance one of the video receiving/analyzing modules is allocated to high-priority one of the programs. When priorities cannot be given to programs, the order of system standard allocation is used.

(2) When priorities can be given to the video/audio analyzing processes, allocation starts at a video receiving/analyzing module which can perform high-priority one of the video/audio analyzing processes. When priorities cannot be given to the video/audio analyzing processes, the order of system standard allocation is used.

For example, some of all constituent elements in one embodiment may be removed, and constituent elements in different embodiments may be combined suitably.

## Claims

1. A broadcast recording apparatus, comprising:
video receiving/analyzing modules at least one of which is different in an analyzing performance from the others;
a controller configured to determine priorities for a contents to be recorded; and
a video storage configured to record the contents,
wherein the controller is configured to determine priorities for the video receiving/analyzing modules, to allocate high-priority one of the video receiving/analyzing modules with high-priority one of the contents, and to control the video storage to record the high-priority one of the contents.

2. The apparatus of Claim 1,
wherein the controller is configured to calculate a user's preference for the contents to be recorded, and to determine the priorities for the contents based on the user's preference.

3. The apparatus of Claim 2,
wherein the controller is configured to give a higher priority to a video receiving/analyzing module based on whether an analyzing process congenial to the user's preference is executable.

4. A broadcast recording apparatus, comprising:
video receiving/analyzing modules at least one of which is different in an analyzing performance from the others;
a controller configured to calculate a user's preference for contents to be recorded, and to determine priorities for the contents based on the user's preference; and
a video storage configured to record the contents,
wherein the controller is configured to determine priorities for the video receiving/analyzing modules to be in an order of analyzing performance, to allocate high-priority one of the video receiving/analyzing modules with high-priority one of the contents, and to control the video storage to record the high-priority one of the contents.

5. A broadcast recording apparatus, comprising:
video receiving/analyzing modules at least one of which is different in an analyzing performance from the others;
a controller configured to calculate a user's preference for analyzing processes to be executed by the video receiving/analyzing modules, and to determine priorities for the video receiving/analyzing modules based on whether the analyzing processes are executable; and
a video storage configured to record the contents,
wherein the controller is configured to allocate high-priority one of the video receiving/analyzing modules with high-priority one of the contents, and to control the video storage to record the high-priority one of the contents.

6. A broadcast recording method in a broadcast recording apparatus having video receiving/analyzing modules at least one of which is different in an analyzing performance from the others and a video storage configured to record contents, the method comprising:
determining priorities for the contents to be recorded;
determining priorities for the video receiving/analyzing modules based on whether an analyzing process congenial to a user's preference is executable;
allocating high-priority one of the video receiving/analyzing modules with high-priority one of the contents; and
controlling the video storage to record the high-priority one of the contents.
